# EUROPEAN PATENT SPECIFICATION

(11) **EP 1 362 876 B1**
(45) Date of publication and mention of the grant of the patent: **08.03.2006**
(21) Application number: 01271408.5
(22) Date of filing: 17.12.2001
(51) Int. Cl.: C08G 59/40, C08G 59/50, C08L 63/00

(54) **ONE-PACK MOISTURE-CURABLE EPOXY RESIN COMPOSITION**
EINKOMPONENTIGE FEUCHTIGKEITSHÄRTBARE EPOXIDHARZZUSAMMENSETZUNG
COMPOSITION DE RESINE EPOXY EN UNE SEULE SOLUTION POUVANT ETRE RETICULEE PAR L'HUMIDITE

(30) Priority: 18.12.2000 JP 2000383379; 18.12.2000 JP 2000383380; 02.03.2001 JP 2001058695; 02.03.2001 JP 2001058696
(43) Date of publication of application: 19.11.2003
(73) Proprietor: KONISHI CO., LTD., Osaka-shi, Osaka-fu 541-0045 (JP)
(72) Inventor: ENDO, Takeshi, Yamagata University, Yonezawa-shi, Yamagata 992-8510 (JP); SANDA, Fumio, Kyoto University, Kyoto-shi, Kyoto 606-8501 (JP); SUZUKI, Kentaro, Konishi Co., Ltd, Osaka-shi, Osaka 538-0053 (JP); HORII, Hisakazu, Konishi Co., Ltd., Osaka-shi, Osaka 538-0053 (JP); MATSUURA, Nobuki, Konishi Co., Ltd., Osaka-shi, Osaka 538-0053 (JP)
(74) Representative: Prins, Adrianus Willem
(86) International application number: PCT/JP2001/011070
(87) International publication number: WO 2002/050154

(56) References cited:
- EP-A- 0 890 594
- EP-A1- 0 890 594
- JP-A- 4 001 220
- JP-A- 7 188 634
- JP-A- 11 021 532
- JP-A- 2000 044 773
- US-A- 6 045 873
- PATENT ABSTRACTS OF JAPAN vol. 1999, no. 04, 30 April 1999 (1999-04-30) -& JP 11 021532 A (YOKOHAMA RUBBER CO LTD:THE), 26 January 1999 (1999-01-26)

## Description

### Technical Field

The present invention relates to a one-pack moisture curable epoxy resin composition having excellent curing properties and good storage stability. Particularly, the present invention relates to a one-pack moisture curable epoxy resin composition having excellent curing properties and good storage stability and suitable as a one-pack room-temperature curable epoxy adhesive, one-pack room-temperature curable epoxy putty material, one-pack room-temperature curable epoxy paint, one-pack room-temperature curable epoxy coating material and one-pack room-temperature curable epoxy potting material.

### Background Art

An epoxy resin composition is excellent in physical strength and adhesion and has been widely used as an adhesive, putty material, paint and coating material. Since the conventional epoxy resin composition uses a highly reactive amine compound as a hardener, it is a two-pack type characterized in that an epoxy resin and the hardener component are mixed together right before use of the two-pack type. However, since the two-pack epoxy resin composition requires such operations as measuring and mixing, it has poor workability. Further, due to complication of the operations, the two-pack epoxy resin composition also has problems such as a measuring error and inadequate mixing. In addition, the two-pack epoxy resin composition also has a problem that time in which it can be used is limited since a chemical reaction in the two-pack type is initiated by mixing.

Under the circumstances, a variety of studies on a one-pack epoxy resin composition have been made, and a number of techniques for a one-pack epoxy resin composition using a moisture hydrolyzable latent hardener, notably a ketimine compound, are known. In particular, from an industrial standpoint, a variety of techniques for a one-pack epoxy resin composition using a ketimine compound obtained from methyl isobutyl ketone as a carbonyl compound have been disclosed.

The ketimine compound is well-known as a latent hardener for an epoxy resin and an isocyanate-terminated urethane polymer. Hereinafter, a reaction mechanism of a composition comprising the latent hardener and an epoxy resin will be described. Firstly, as a first reaction, the ketimine compound reacts with moisture in the air and is hydrolyzed so as to produce a primary amine compound having active hydrogen. Thus, the first reaction is a process in which the latent hardener is hydrolyzed by moisture. Subsequently, as a second reaction, the produced amine compound having active hydrogen reacts with the epoxy resin, and by this mechanism, the epoxy resin composition is cured. Thus, the second reaction is a process in which the hydrolyzed latent hardener chemically reacts with the epoxy resin. That is, the reaction mechanism of the composition comprising the latent hardener and the epoxy resin is a two-step reaction comprising the reaction of the latent hardener with moisture and the reaction of the amine compound with the epoxy resin. In these two processes, the most important points with respect to the composition comprising the ketimine compound as the latent hardener and the epoxy resin are that (1) the quicker the hydrolysis of the ketimine compound proceeds, quicker-curability can be obtained and that (2) the higher the reactivity of the amine compound resulting from the hydrolysis, the more easily physical properties such as quick curability and high strength are obtained. To accelerate the hydrolysis of the ketimine compound, a method of avoiding having a substituent which causes steric hindrance in the vicinity of a C=N double bond so as to improve reactivity with water can be used. However, such a reduction in the effect of the steric hindrance causes the C=N group to be unprotected, and due to basicity of the nitrogen atom, polymerization of an epoxy group proceeds. Meanwhile, when a substituent which causes steric hindrance is introduced in the vicinity of the C=N double bond in consideration of storage stability, the hydrolysis of the ketimine compound is decelerated, thereby impairing practical curing properties. Further, although storage stability is improved by use of a ketimine compound obtained from an amine compound having low reactivity with the epoxy resin, the reactivity of an amine compound produced after hydrolysis is low, and it is difficult to obtain practical curing properties. Hence, it was the limitation of the prior art that it could not help but relying on means using a ketimine compound obtained from an amine compound having high reactivity with the epoxy resin and having a low hydrolysis rate, in consideration of storage stability. Thus, since there is a dilemma that an improvement in quick curability causes impairment of storage stability, a technique of achieving practical quick curability and practical storage stability simultaneously in the composition comprising the ketimine compound and the epoxy resin is not yet found at all.

Meanwhile, recently, a technique of improving storage stability by use of a specific ketimine compound obtained from a carbonyl compound having steric hindrance is disclosed in WO98/31722. The specific ketimine compound has low hydrolyzability since water hardly makes contact with a site showing hydrolyzability due to its steric structure. Therefore, the ketimine compound has the conventional problem that although it can impart good storage stability, it fails to impart good curing properties such as quick curability. That is, when the specific ketimine compound is used, there arises a problem that curing of an epoxy resin composition proceeds slowly, so that initial adhesive strength and mechanical strength are slow to become in effect. It takes long-time curing to attain practicable physical properties, so that the ketimine compound is practically unsatisfactory. Consequently, even this technique is not a technique capable of achieving practical curing properties and practical storage stability simultaneously. That is, it is a technical means which is an extension of the prior art.

Thus, if a composition having practical quick curability and practical storage stability is found out of compositions comprising a ketimine compound as a latent hardener and an epoxy resin, it becomes a fundamental technique for an adhesive, putty material, paint, coating material and potting material using these compositions, so that usefulness of such a composition in industry is significantly improved.

Under the circumstances, an object of the present invention is to provide a one-pack moisture curable epoxy resin composition which can be cured at room temperature and shows balanced contradictory properties, i.e., excellent storage stability as well as excellent quick curability which significantly accelerates onsets of initial adhesive strength and mechanical strength.

### Disclosure of the Invention

As means for achieving the above object according to the present invention, a first invention is a one-pack moisture curable epoxy resin composition comprising:
a ketimine compound represented by the following chemical formula (2) which is synthesized from a carbonyl compound represented by the following chemical formula (1) in which two same or different alkyl groups each having 2 to 6 carbon atoms are bonded to a carbonyl group and an amine compound having at least one primary amino group in a molecule, and
an epoxy resin:

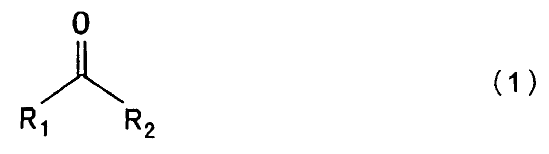

wherein R₁ is an alkyl group having 2 to 6 carbon atoms, and R₂ is an alkyl group having 2 to 6 carbon atoms, and 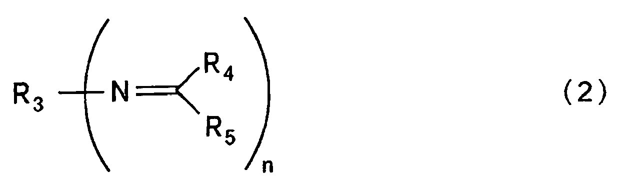
wherein R₃ is an organic group,
R₄ is an alkyl group having 2 to 6 carbon atoms,
R₅ is an alkyl group having 2 to 6 carbon atoms, and
n is an integer of 1 or more.

A second invention is a one-pack moisture curable epoxy resin composition in which R₁ and R₂ of the carbonyl compound represented by the above chemical formula (1) are a ketimine compound synthesized from a carbonyl compound having an alkyl group having 2 or 3 carbon atoms.

A third invention is the one-pack moisture curable epoxy resin composition of the first invention in which the carbonyl compound represented by the above chemical formula (1) is a carbonyl compound represented by the following chemical formula (3) in which two ethyl groups are bonded to a carbonyl group:

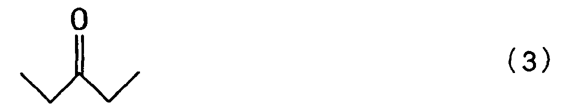

A fourth invention is a one-pack moisture curable epoxy resin composition containing, as a stabilizer, one or two or more silyl compounds selected from the group consisting of a silyl compound represented by the following chemical formula (4) and a silyl compound represented by the following chemical formula (5): 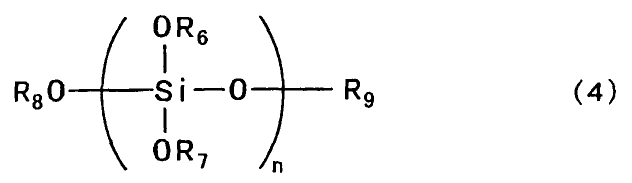
wherein R₆, R₇, R₈ and R₉ are each an alkyl group and they may be the same or different, and
n is an integer of 1 or more, and 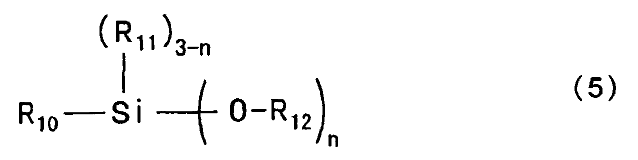
wherein R₁₀ is an organic group,
R₁₁ and R₁₂ are each an alkyl group and they may be the same or different, and
n is an integer of 1 to 3.

A fifth invention is a one-pack moisture curable epoxy resin composition containing a vinyl carboxylate compound represented by the following chemical formula (6) as a stabilizer: 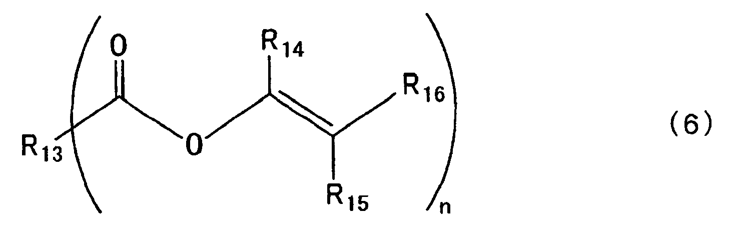
wherein R₁₃ is a hydrogen atom or an organic group,
R₁₄, R₁₅ and R₁₆ are each a hydrogen atom or an organic group and they may be the same or different, and
n is an integer of 1 or more.

A sixth invention is a one-pack moisture curable epoxy resin composition containing, as an accelerator, one or two or more silyl ester compounds selected from the group consisting of a silyl ester compound represented by the following chemical formula (7) and a silyl ester compound represented by the following chemical formula (8): 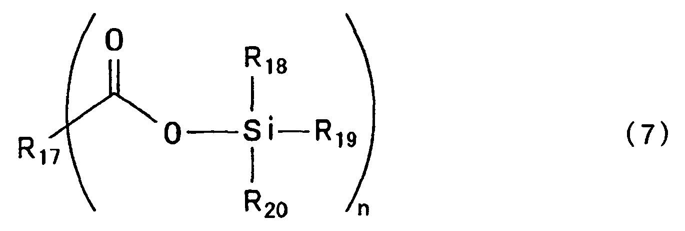
wherein R₁₇ is an organic group,
R₁₈, R₁₉ and R₂₀ are each an organic group and they may be the same or different, and
n is an integer of 1 or more, and 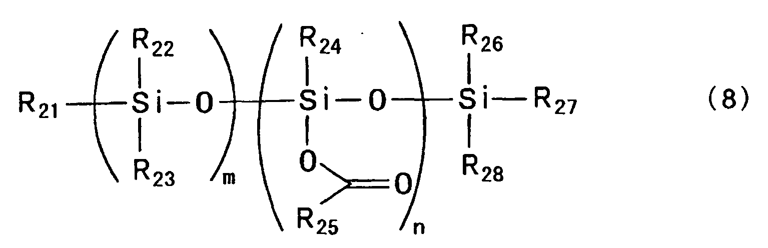
wherein R₂₁, R₂₂, R₂₃, R₂₄, R₂₅, R₂₆, R₂₇ and R₂₈ are each an organic group and they may be the same or different,
m is an integer of 0 or more, and
n is an integer of 1 or more.

### Best Mode for Carrying out the Invention

Hereinafter, the present invention will be described in more detail.

A ketimine compound used in the present invention is a hydrolyzable compound represented by the following chemical formula (2) which has a double bond between a carbon atom and a nitrogen atom. The ketimine compound is a compound obtained by reacting a carbonyl compound in which two same or different alkyl groups selected from the group consisting of alkyl groups having 2 to 6 carbon atoms are bonded to a carbon atom in a carbonyl group, with an amine compound having a primary amino group. 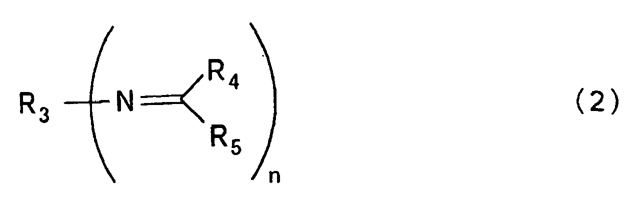
wherein R₃ is an organic group,
R₄ is an alkyl group having 2 to 6 carbon atoms,
R₅ is an alkyl group having 2 to 6 carbon atoms, and
n is an integer of 1 or more.

The ketimine compound may be any compound having the structure represented by the above chemical formula (2). Illustrative examples of such a compound include N,N'-di(1-ethylpropylidene)-1,3-bisaminomethylcyclohexane represented by the following chemical formula (9) and N,N'-di(1-ethylpropylidene)-meta-xylylene diamine represented by the following chemical formula (10). These are a dehydration condensate of 1,3-bisaminomethylcyclohexane and diethyl ketone and a dehydration condensate of meta-xylylene diamine and diethyl ketone, respectively.

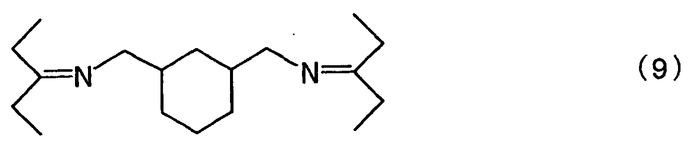

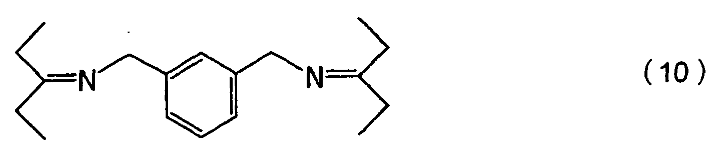

The carbonyl compound which is used as a raw material of the ketimine compound used in the present invention may be any carbonyl compound represented by the following chemical formula (1) in which two same or different alkyl groups selected from the group consisting of alkyl groups having 2 to 6 carbon atoms are bonded to a carbon atom in a carbonyl group. Particularly, a carbonyl compound whose carbon atom at an α position is a methylene structure is preferred since it shows good hydrolyzability. Specific examples of the carbonyl compound include diethyl ketone, dipropyl ketone, dibutyl ketone, ethyl propyl ketone, and ethyl butyl ketone: 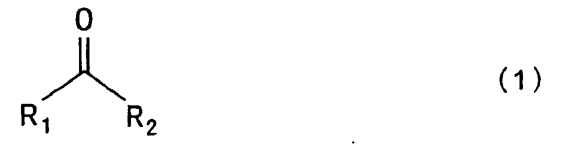
wherein R₁ is an alkyl group having 2 to 6 carbon atoms, and R₂ is an alkyl group having 2 to 6 carbon atoms,

Of these carbonyl compounds, a carbonyl compound having same or different alkyl groups each having 2 or 3 carbon atoms has high hydrolyzability. Thus, in particular, a ketimine compound obtained from the carbonyl compound having same or different alkyl groups each having 2 or 3 carbon atoms is preferred since it imparts quick curability when mixed into an epoxy resin. Of these, a ketimine compound obtained from diethyl ketone represented by the following chemical formula (3) which has same alkyl groups each having 2 carbon atoms is the most preferable since it shows the highest hydrolyzability and imparts the quickest curability when mixed into an epoxy resin:

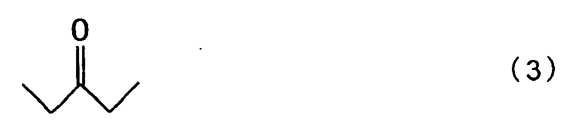

The amine compound which is used as a raw material of the ketimine compound used in the present invention may be any compound having a primary amino group. Specific examples thereof include, but not limited to, ethylene diamine, diethylene triamine, 1,3-bisaminomethylcyclohexane, norbornane diamine, meta-xylylene diamine, isophorone diamine, bis(4-aminocyclohexyl)methane, a polyamine having a polyoxylene skeleton, N-β(aminoethyl)γ-aminopropyltrimethoxysilane, N-β(aminoethyl)γ-aminopropylmethyldimethoxysilane, γ-aminopropyltrimethoxysilane, and γ-aminopropyltriethoxysilane. An amine compound having two or more primary amino groups in a molecule is preferred since excellent mechanical strength is obtained.

Curing of a one-pack epoxy resin composition using a ketimine compound proceeds in two steps, i.e., (1) hydrolysis of the ketimine compound and (2) reaction of a produced amine compound with an epoxy group. A rate-determining step in curing of an epoxy resin is a step in which the ketimine compound is hydrolyzed. A ketimine compound synthesized from a carbonyl compound having alkyl groups having 2 to 6 carbon atoms in a carbonyl group and an amine compound has a lower electron density in a carbon atom in a C=N double bond than a conventionally used ketimine compound synthesized from methyl isobutyl ketone (MIBK) or methyl ethyl ketone (MEK). Therefore, it reacts with water easily and shows a very high hydrolysis rate accordingly. That is, it shows a very high cure rate.

Further, a reduction in stability of the one-pack epoxy resin composition using the ketimine compound is caused by basicity of a nitrogen atom in a C=N double bond. In the case of the conventionally used ketimine compound synthesized from MIBK or MEK, a nitrogen atom in a C=N double bond is unprotected since a methyl group is bonded to a carbon atom in the C=N double bond. Meanwhile, in the case of the ketimine compound, an alkyl group having 2 or more carbon atoms and larger than a methyl group is bonded to a carbon atom in the C=N double bond, and the alkyl group acts as steric hindrance so as to prevent impairment of storage stability.

The ketimine compound may be produced by any production method. For example, it can be produced by mixing the above carbonyl compound and the above amine compound in the absence of a solvent or in the presence of a nonpolar solvent (such as hexane, cyclohexane, toluene or benzene), subjecting the mixture to reflux under heating, and removing produced water by azeotropy. As the carbonyl compound and amine compound used as raw materials, one or two or more compounds selected from a variety of carbonyl compounds and one or two or more compounds selected from a variety of amine compounds may be used.

Further, it is needless to say that two or more of the foregoing ketimine compounds may be used in the one-pack epoxy resin composition. In addition, as long as curing properties and storage stability are not impaired, a ketimine compound synthesized from a general carbonyl compound or other latent hardener which is hydrolyzed by water in the air so as to produce an amine compound, such as an aldimine compound synthesized from an aldehyde compound, may also be used.

The epoxy resin may be any epoxy resin as long as it has an epoxy group capable of reacting with the amine compound resulting from hydrolysis of the ketimine compound at the time of its use. Illustrative examples of the epoxy resin include a biphenyl epoxy resin, a bisphenol-A epoxy resin, a bisphenol-F epoxy resin, a bisphenol-AD epoxy resin and a bisphenol-S epoxy resin which are obtained by reacting biphenyl, bisphenol A, bisphenol F, bisphenol AD and bisphenol S with epichlorhydrin, epoxy resins resulting from hydrogenation or bromination of these epoxy resins, a glycidyl ester epoxy resin, a novolac epoxy resin, an urethane-modified epoxy resin having an urethane bond, a nitrogen-containing epoxy resin resulting from epoxidation of meta-xylene diamine or hydantoin, and a rubber-modified epoxy resin containing a polybutadiene or NBR. The epoxy resin is not limited to these epoxy resins, and two or more epoxy resins may be used in combination.

The mixing ratio of the ketimine compound and the epoxy resin in the present invention is determined according to the equivalent of active hydrogen in the amine compound resulting from hydrolysis of the ketimine compound and the equivalent of an epoxy group in the epoxy resin. That is, the equivalent of the active hydrogen in the amine compound resulting from the hydrolysis of the ketimine compound is preferably 0.5 to 2.0 times as much as the equivalent of the epoxy group. When the mixing ratio is lower than the above range, the epoxy resin becomes excessive, crosslinking in a cured product does not proceed to a satisfactory degree, and practical mechanical strength cannot be obtained. When the mixing ratio is higher than the above range, the amine compound resulting from the hydrolysis becomes excessive, and in this case as well, due to the same reason, practical mechanical strength cannot be obtained. The mixing ratio preferably falls within the above range since a crosslinked structure with practical mechanical strength can be obtained. The mixing ratio is more preferably 0.8 to 1.2 times since an ideal crosslinked structure with better mechanical strength as an adhesive composition can be obtained.

To the one-pack moisture curable epoxy resin composition of the present invention, a stabilizer may be added as required.

As the stabilizer, an alkoxysilane compound is very effective because the alkoxysilane has very high reactivity with water and reacts with water entering at the time of production and storage.

An alkoxysilane compound used in the present invention may be any one or two or more silyl compounds selected from the group consisting of silyl compounds represented by the following chemical formula (4) and the following chemical formula (5): 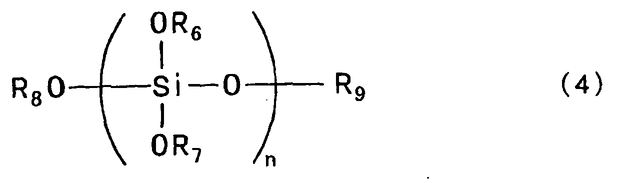
wherein R₆, R₇, R₈ and R₉ are each an alkyl group and they may be the same or different, and
n is an integer of 1 or more, and 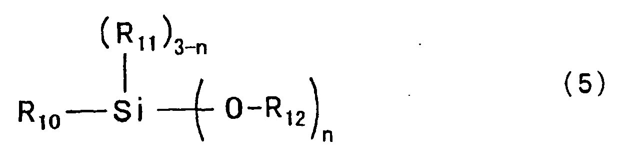
wherein R₁₀ is an organic group,
R₁₁ and R₁₂ are each an alkyl group and they may be the same or different, and
n is an integer of 1 to 3.

Illustrative examples of the above chemical formula (4) include monomers such as tetramethoxysilane, tetraethoxysilane and tetrabutoxysilane, and polymers thereof. Illustrative examples of the above chemical formula (5) include dimethyldimethoxysilane, methyltrimethoxysilane, methyltriethoxysilane, vinyltrimethoxysilane, vinyltriethoxysilane, γ-glycidoxypropyltrimethoxysilane, γ-glycidoxypropyltriethoxysilane, γ-glycidoxypropylmethyldiethoxysilane, and γ-isocyanatepropyltriethoxysilane.

The mixing ratio of the alkoxysilane compound and the epoxy resin in the present invention varies according to the type of the silyl compound to be used. However, it is preferred that the amount of the silyl compound be not smaller than 10 parts by weight based on 100 parts by weight of the epoxy resin. When the amount is lower than the above limit, the amount of the silyl compound is so small that the composition cannot withstand long time storage although its stability can be maintained over short time storage. Thus, the amount is preferably equal to or higher than the above limit since good storage stability can be obtained even over a long time period. The amount is more preferably not smaller than 30 parts by weight since the most superior storage stability can be obtained.

As the alkoxysilane compound used in the present invention, two or more alkoxysilane compounds may be used in combination.

Further, as the stabilizer in the present invention, a vinyl carboxylate compound may be used since the vinyl carboxylate preferentially reacts with the amine compound produced from the ketimine compound by water entering at the time of production and during storage so as to produce an amide compound having low reactivity with an epoxy group.

The vinyl carboxylate compound used in the present invention may be any compound represented by the following chemical formula (6) which has a vinyl carboxylate group. Specific examples thereof include vinyl acetate, vinyl butyrate, vinyl caproate, vinyl caprylate, vinyl caprate, vinyl laurate, vinyl myristate, vinyl palmitate, vinyl stearate, vinyl cyclohexane carboxylate, vinyl octoate, vinyl monochloroacetate, divinyl adipate, vinyl methacrylate, vinyl crotonate, vinyl sorbate, vinyl benzoate, and vinyl cinnamate. It is needless to say that the vinyl carboxylate used in the present invention is not limited to these vinyl carboxylates and two or more vinyl carboxylates may be used in combination. 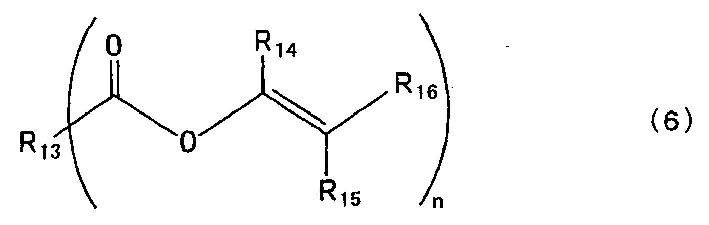
wherein R₁₃ is a hydrogen atom or an organic group,
R₁₄, R₁₅ and R₁₆ are each a hydrogen atom or an organic group and they may be the same or different, and
n is an integer of 1 or more.

As for the amount of the vinyl carboxylate based on the epoxy resin in the present invention, it is preferably 1 to 30 mol% per mol of an epoxy group. When the amount is larger than the above range, the vinyl carboxylate hinders reaction with the epoxy resin by reacting with the amine compound produced from the ketimine compound. When the amount is smaller than the above range, the vinyl carboxylate cannot fully react with the amine compound produced from the ketimine compound hydrolyzed by a small amount of water entering the composition during storage, so that storage stability is not improved. The amount preferably falls within the above range since practical storage stability can be obtained. The amount is more preferably 5 to 15 mol% since more ideal storage stability can be obtained.

To the one-pack moisture curable epoxy resin composition of the present invention, an accelerator may be added as required.

As the accelerator, a silyl carboxylate is very effective since the silyl carboxylate is hydrolyzed by water in the air so as to produce a carboxylic acid which accelerates the hydrolysis of the ketimine compound and the reaction between the amine compound and the epoxy group and does not cause an adverse effect such as thickening of the composition during storage.

The silyl carboxylate compound used in the present invention may be any one or two or more compounds selected from the group consisting of two compounds represented by the following chemical formulae (7) and (8) which have silyl carboxylate groups. Specific examples of the silyl carboxylate include trimethylsilyl acetate, trimethylsilyl benzoate, trimethylsilyl 2-ethylhexanoate, ditrimethylsilyl maleate, and ditrimethylsilyl adipate. Further, as such a silyl carboxylate, a variety of commercial products are sold, and these commercial products can be used. Specific examples thereof include KF-910 of SHIN-ETSU CHEMICAL CO., LTD. The silyl carboxylate used in the present invention is not limited to these silyl carboxylates, and two or more silyl carboxylates may be used in combination. 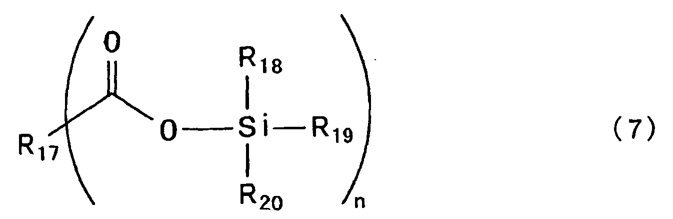
wherein R₁₇ is an organic group,
R₁₈, R₁₉ and R₂₀ are each an organic group and they may be the same or different, and
n is an integer of 1 or more, and 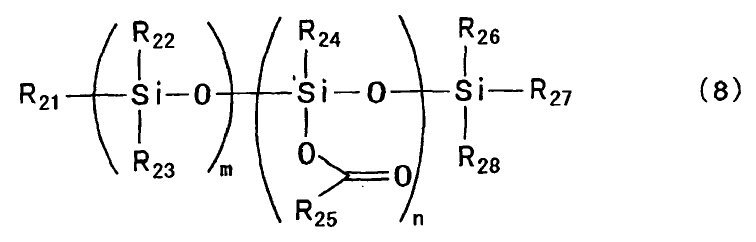
wherein R₂₁, R₂₂, R₂₃, R₂₄, R₂₅, R₂₆, R₂₇ and R₂₈ are each an organic group and they may be the same or different,
m is an integer of 0 or more, and
n is an integer of 1 or more.

As for the amount of the silyl carboxylate based on the epoxy resin in the present invention, it is preferably 0.1 to 20 parts by weight based on 100 parts by weight of the epoxy resin. When the amount is larger than the above range, a carboxylic acid produced from the silyl carboxylate causes a neutralization reaction with the amine compound produced from the ketimine compound, so that a curing reaction does not proceed to a sufficient degree. When it is smaller than the above range, the effect of accelerating the hydrolysis of the ketimine compound is weak, so that quick curability cannot be obtained. The amount preferably falls within the above range since practical quick curability can be obtained. The amount of the silyl carboxylate is more preferably 0.2 to 10 parts by weight since more ideal quick curability can be obtained.

In the present invention, in addition to the foregoing components such as the ketimine compound and the epoxy resin, a dehydrating agent is also preferably used. The dehydrating agent is primarily used to prevent it from occurring that the ketimine compound is hydrolyzed by water and reacts with the epoxy resin. A variety of dehydrating agents having such a dehydrating effect can be used. In general, in addition to the silyl compounds represented by the above chemical formulae (4) and (5), acethylacetone, an orthoformate and the like are preferably used. The dehydrating agent is generally used in an amount of about 1 to 10 parts by weight based on 100 parts by weight of the epoxy resin. The amount of the dehydrating agent is preferably such an amount that does not impair the quick curability of the one-pack moisture curable epoxy resin composition of the present invention.

In addition to the foregoing compounds, the one-pack moisture curable epoxy resin composition of the present invention may also contain a filler such as calcium carbonate or titanium oxide, a coupling agent such as epoxysilane or vinylsilane, a plasticizer, a thixotropy imparting agent, a pigment, a dye, an age resistor, an antioxidant, an antistatic agent, a flame retardant, an adhesion imparting agent, a dispersant, a solvent and the like in such an amount that does not impair the effect of the present invention. In this case, it gives a favorable result on storage stability that the influence of water in the above components which may be contained is removed as much as possible.

A production method of the one-pack moisture curable epoxy resin composition of the present invention is not particularly limited but is preferably produced by fully kneading its raw materials under a nitrogen atmosphere or a reduced pressure by use of a stirrer such as a mixer. An example of the production method is as follows. An epoxy resin is put in a closed processing furnace equipped with a stirrer, a condenser, a heater, a low-pressure dehydrator and a nitrogen current ventilator. Using the nitrogen current ventilator, a modifier or an additive is added to the epoxy resin as desired and they are mixed uniformly under nitrogen reflux. Thereafter, a ketimine compound is added eventually and mixed uniformly so as to prepare a one-pack moisture curable epoxy resin composition. Then, the one-pack moisture curable epoxy resin composition is put in a nitrogen-substituted closed container so as to become a final product. When water is contained in the modifier or additive, the composition is liable to be cured during storage and storage stability deteriorates. Hence, it is preferable to remove the water from the modifier or additive in advance. The water may be removed before addition of the modifier or additive or removed by means of heating or decompression after they are added to the epoxy resin.

### EXAMPLES

Hereinafter, the present invention will be described based on Examples. The present invention, however, shall not be limited to the Examples.

### [Synthesis of Ketimine Compound]

### (Synthesis Example 1)

142 g of 1,3-bisaminomethylcyclohexane (product of Mitsubishi Gas Chemical Company Inc., trade name: 1,3-BAC), 258 g of diethyl ketone corresponding to 3 time mole equivalents, and 200 g of toluene were put in a flask and, while produced water was removed by azeotropy, they were allowed to react for 20 hours at temperatures (120 to 150°C) at which toluene and diethyl ketone were refluxed. Then, excessive diethyl ketone and toluene were distilled out so as to obtain a ketimine compound A.

### (Synthesis Example 2)

A ketimine compound B was obtained in the same manner as in Synthesis Example 1 except that 136 g of meta-xylylene diamine (product of Mitsubishi Gas Chemical Company Inc., trade name: MXDA) was used as an amine compound.

### (Synthesis Example 3)

A ketimine compound C was obtained in the same manner as in Synthesis Example 1 except that 154 g of norbornane diamine (product of Mitsui Chemicals, Inc., trade name: NBDA) was used as an amine compound.

### (Synthesis Example 4)

A ketimine compound D was obtained in the same manner as in Synthesis Example 2 except that 300 g of ethyl propyl ketone was used as a carbonyl compound.

### (Synthesis Example 5)

A ketimine compound E was obtained in the same manner as in Synthesis Example 2 except that 342 g of dipropyl ketone was used as a carbonyl compound.

### (Synthesis Example 6)

A ketimine compound F was obtained in the same manner as in Synthesis Example 1 except that 300 g of methyl isobutyl ketone was used as a carbonyl compound.

### (Synthesis Example 7)

A ketimine compound G was obtained in the same manner as in Synthesis Example 1 except that 258 g of methyl isopropyl ketone was used as a carbonyl compound.

### [Synthesis of Silyl Carboxylate]

12.2 g of benzoic acid (product of TOKYO KASEI KOGYO CO, LTD.) and 0.1 g of saccharine (product of TOKYO KASEI KOGYO CO, LTD.) were dissolved in 100 ml of chloroform, and then 9.7 g of hexamethyldisilazane was added dropwise thereto under agitation. After completion of the dropwise addition, the solution was heated to 60°C and stirred continuously until it became transparent. Then, the chloroform solvent was distilled out so as to obtain a silyl carboxylate compound A.

### (Synthesis Example 9)

A silyl carboxylate compound B was obtained in the same manner as in Synthesis Example 8 except that 14.4 g of 2-ethylhexanoic acid was used as a carboxylic acid.

### (Synthesis Example 10)

A silyl carboxylate compound C was obtained in the same manner as in Synthesis Example 8 except that 11.6 g of maleic acid and 19.3 g of hexamethyldisilazane were used as carboxylic acids.

### (Example 1)

100 parts by weight of epoxy resin (product of YUKA SHELL EPOXY CO., LTD. (corporate name change: Japan Epoxy Resins), trade name: Epikote 828), 40 parts by weight of heavy calcium carbonate (product of NITTO FUNKA KOGYO CO., LTD., trade name: NS100) and 80 parts by weight of surface-treated calcium carbonate (product of MARUO CALCIUM CO., LTD., trade name: MS700) were heated at 100°C under a reduced pressure of 15 Torr for 2 hours and stirred and mixed until the mixture became uniform. After the mixture became uniform, it was cooled to room temperature. Then, to the mixture, 40 parts by weight of the ketimine compound A as a hardener for the epoxy resin, 5 parts by weight of vinyl silane coupling agent (product of SHIN-ETSU CHEMICAL CO., LTD., trade name: KBM1003) and 2 parts by weight of epoxy silane coupling agent (product of SHIN-ETSU CHEMICAL CO., LTD., trade name: KBM403) were added, and the resulting mixture was stirred under a reduced pressure so as to obtain a one-pack moisture curable epoxy resin composition.

### (Example 2)

A one-pack moisture curable epoxy resin composition was obtained in the same manner as in Example 1 except that the ketimine compound B was used as a hardener for the epoxy resin.

### (Example 3)

A one-pack moisture curable epoxy resin composition was obtained in the same manner as in Example 1 except that the ketimine compound C was used as a hardener for the epoxy resin.

### (Example 4)

A one-pack moisture curable epoxy resin composition was obtained in the same manner as in Example 1 except that the ketimine compound D was used as a hardener for the epoxy resin.

### (Example 5)

A one-pack moisture curable epoxy resin composition was obtained in the same manner as in Example 1 except that the ketimine compound E was used as a hardener for the epoxy resin.

### (Example 6)

A one-pack moisture curable epoxy resin composition was obtained in the same manner as in Example 1 except that the ketimine compound A as a hardener for the epoxy resin was increased to 45 parts by weight, the vinyl silane coupling agent and the epoxy silane coupling agent were removed, and 40 parts by weight of ethyl silicate (GE Toshiba Silicones Co., Ltd., TSL8124) was added as a stabilizer.

### (Example 7)

A one-pack moisture curable epoxy resin composition was obtained in the same manner as in Example 6 except that 40 parts by weight of vinyl silane coupling agent (product of SHIN-ETSU CHEMICAL CO., LTD., trade name: KBM1003) was used in place of the ethyl silicate as a stabilizer.

### (Example 8)

A one-pack moisture curable epoxy resin composition was obtained in the same manner as in Example 6 except that 40 parts by weight of epoxy silane coupling agent (product of SHIN-ETSU CHEMICAL CO., LTD., trade name: KBM403) was used in place of the ethyl silicate as a stabilizer.

### (Example 9)

A one-pack moisture curable epoxy resin composition was obtained in the same manner as in Example 8 except that the ketimine compound C was used as a hardener for the epoxy resin.

### (Example 10)

A one-pack moisture curable epoxy resin composition was obtained in the same manner as in Example 6 except that 6.6 parts by weight of vinyl butyrate was used in place of the ethyl silicate as a stabilizer.

### (Example 11)

A one-pack moisture curable epoxy resin composition was obtained in the same manner as in Example 10 except that 13.1 parts by weight of vinyl laurate was used in place of vinyl butyrate as a stabilizer.

### (Example 12)

A one-pack moisture curable epoxy resin composition was obtained in the same manner as in Example 8 except that 13.1 parts by weight of vinyl laurate was used as a stabilizer.

### (Example 13)

A one-pack moisture curable epoxy resin composition was obtained in the same manner as in Example 1 except that 2 parts by weight of the silyl carboxylate A was added as an accelerator.

### (Example 14)

A one-pack moisture curable epoxy resin composition was obtained in the same manner as in Example 1 except that the silyl carboxylate B was used as an accelerator.

### (Example 15)

A one-pack moisture curable epoxy resin composition was obtained in the same manner as in Example 1 except that the silyl carboxylate C was used as an accelerator.

### (Example 16)

A one-pack moisture curable epoxy resin composition was obtained in the same manner as in Example 8 except that 2 parts by weight of the silyl carboxylate C was added as an accelerator.

### (Example 17)

A one-pack moisture curable epoxy resin composition was obtained in the same manner as in Example 12 except that 2 parts by weight of the silyl carboxylate C was added as an accelerator.

### (Example 18)

A one-pack moisture curable epoxy resin composition was obtained in the same manner as in Example 1 except that the epoxy silane coupling agent was not used.

### (Example 19)

A one-pack moisture curable epoxy resin composition was obtained in the same manner as in Example 18 except that 5 parts by weight of ethyl silicate was used in place of the vinyl silane coupling agent.

### (Example 20)

A one-pack moisture curable epoxy resin composition was obtained in the same manner as in Example 1 except that the vinyl silane coupling agent was not used and the epoxy silane coupling agent was increased to 7 parts by weight.

### (Comparative Example 1)

A one-pack moisture curable epoxy resin composition was obtained in the same manner as in Example 1 except that the ketimine compound F was used in place of the ketimine compound A as a hardener for the epoxy resin.

### (Comparative Example 2)

A one-pack moisture curable epoxy resin composition was obtained in the same manner as in Example 1 except that the ketimine compound G was used in place of the ketimine compound A as a hardener for the epoxy resin.

Tests were conducted by use of the epoxy resin compositions of Examples 1 to 20 and Comparative Examples 1 and 2. The results are shown in Tables 1 to 3.

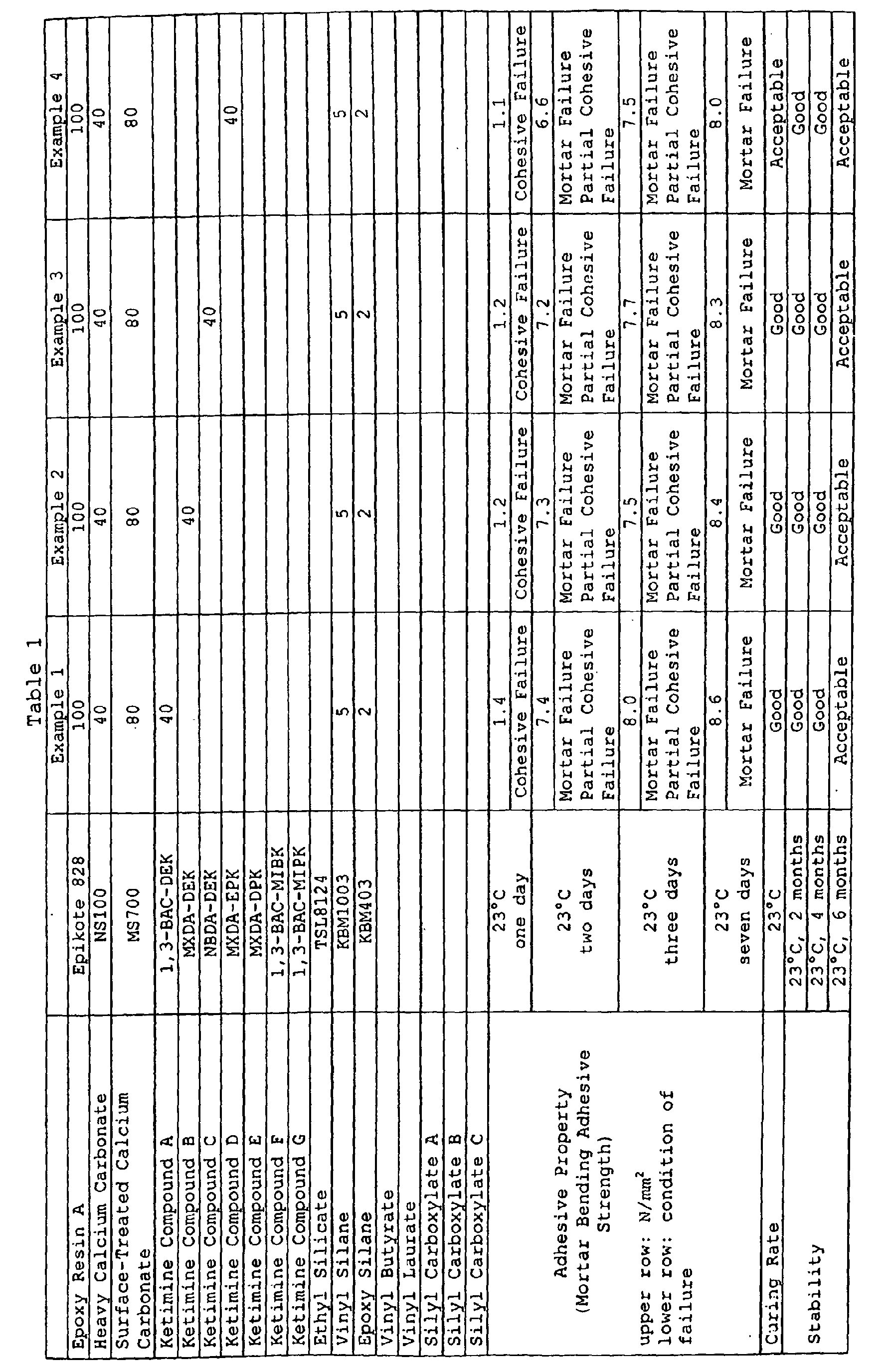

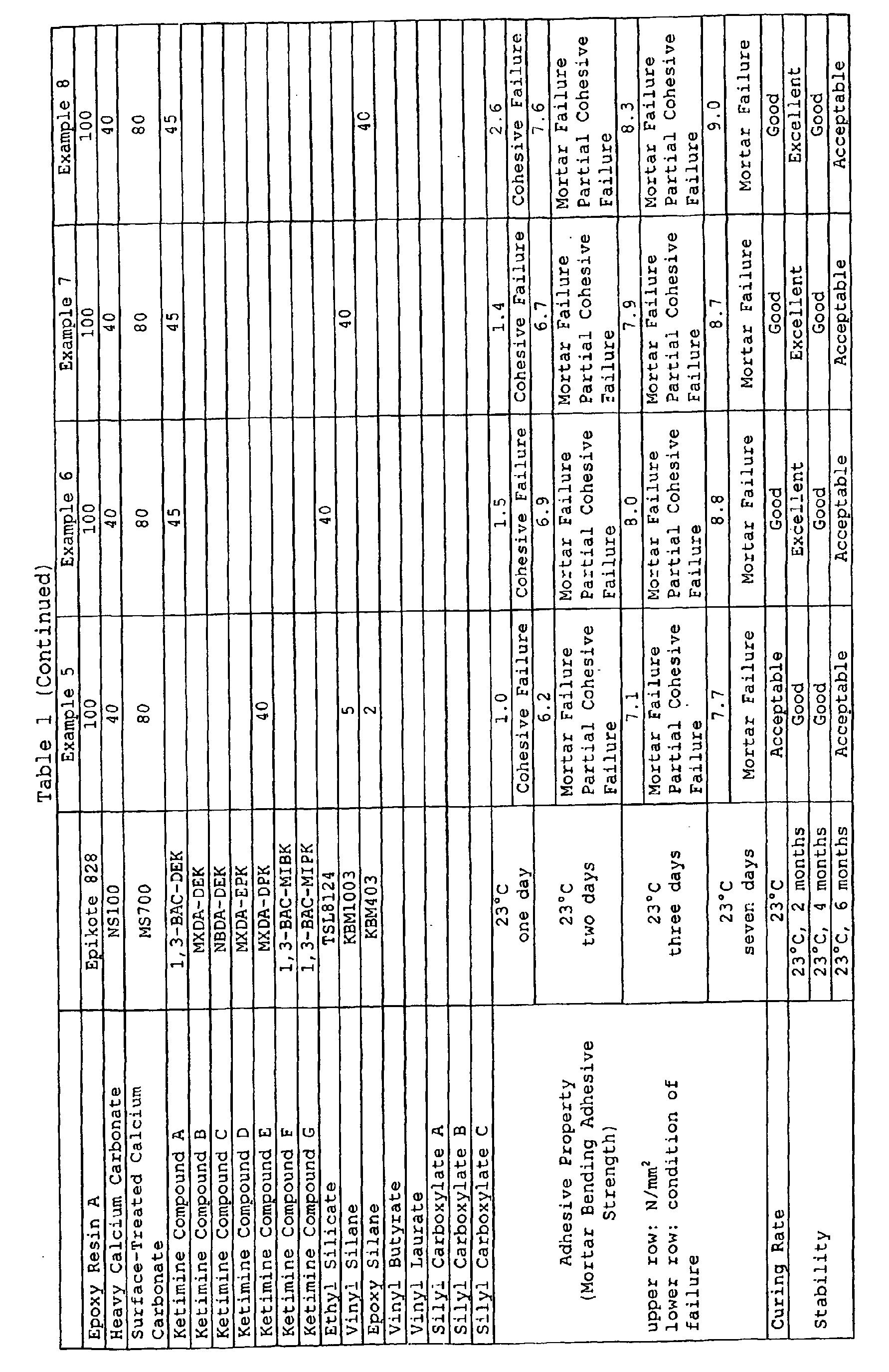

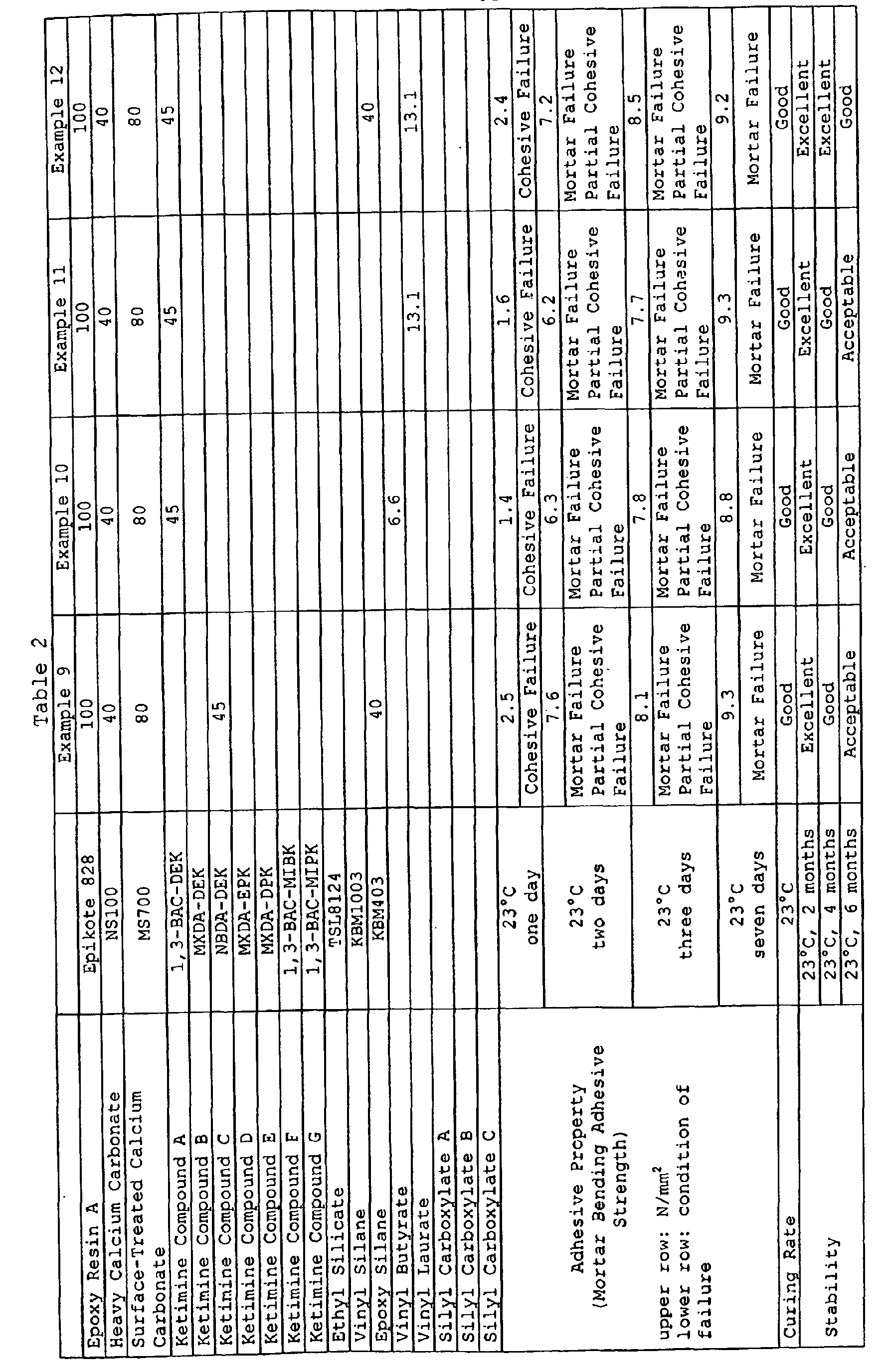

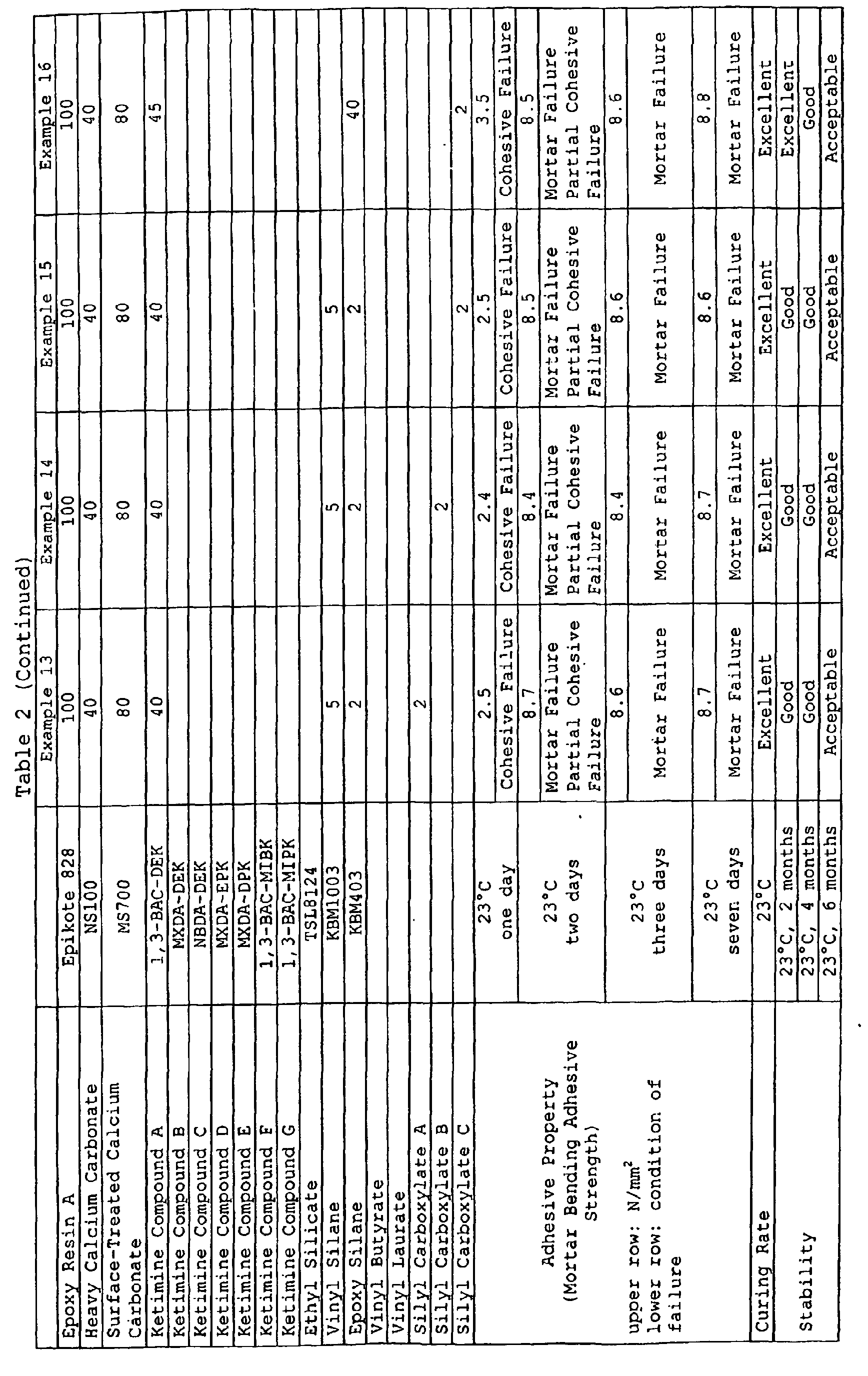

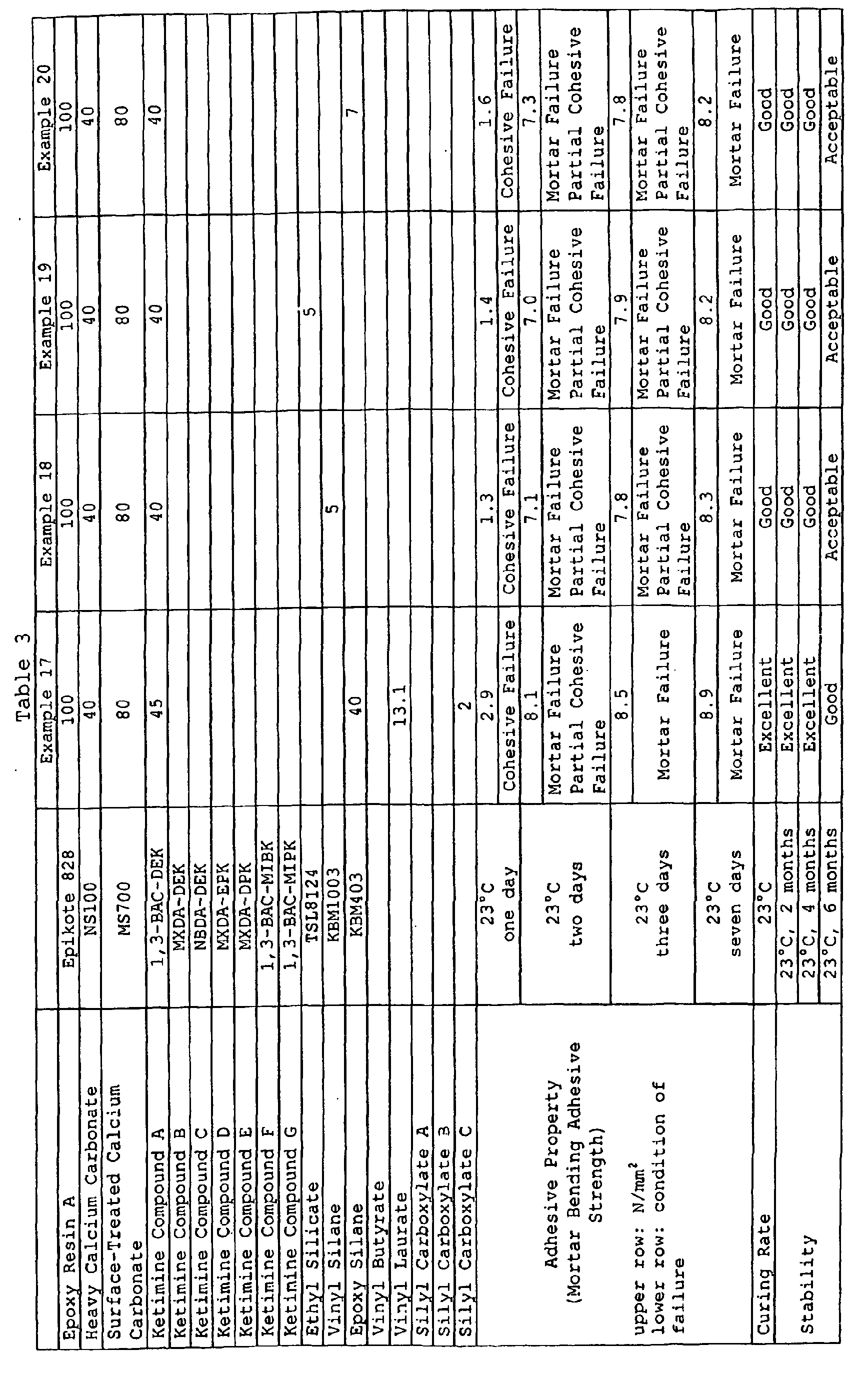

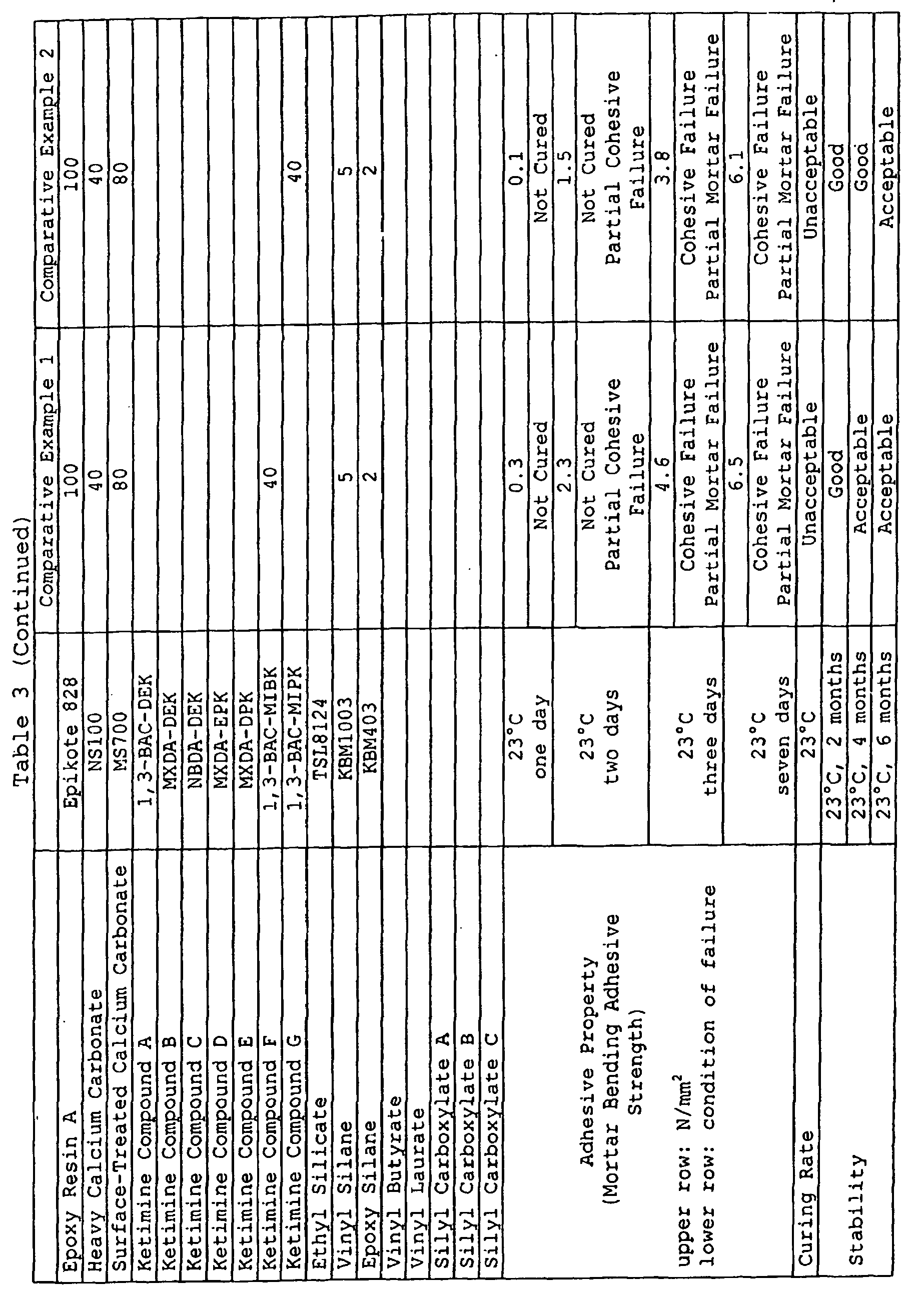

1) Adhesive Property: This test was conducted in accordance with a standard condition (aging at 23°C for 7 days) of an adhesive strength test in JIS A6024 (injection epoxy resin for construction repairing). To evaluate the quick curability of the adhesive composition, the above adhesive strength test was conducted upon aging of the composition at 23°C for 1, 2, 3 and 7 days so as to evaluate a rise of adhesive strength. Its unit was N/mm², and a condition of failure at that time was shown.
2) Curing Rate: The one-pack moisture curable epoxy resin composition was applied on a glass plate to a thickness of 0.3 mm and left to stand at 23°C and 50%RH. By use of a drying recorder (product of YASUDA SEIKI CO., LTD., R.C.I. Drying Time Tester), its curing time was measured (in accordance with a method of measuring curing time based on Construction Ministry's united engineering development project: repairing material standard testing method in development of technique of improving durability of concrete), and according to the length of the curing time, its curing rate was rated on the following four-rank scale of "Excellent", "Good", "Acceptable" and "Unacceptable". Excellent: curing time ≤ 10 hours
   Good: 10 hours < curing time ≤ 12 hours
   Acceptable: 12 hours < curing time ≤ 15 hours
   Unacceptable: 15 hours < curing time
   To rate the characteristic value of the curing rate in the present invention, a characteristic value rated as "Excellent" is the most excellent from a practical standpoint, followed by one rated as "Good". A characteristic value rated as "Acceptable" is inferior to those rated as "Excellent" and "Good" but still has practicability. However, "Unacceptable" represents a characteristic value which is the most inferior and lacks practicability.
3) Stability: The one-pack moisture curable epoxy resin composition was filled and sealed in a cartridge, and its viscosity was measured after the composition was left to stand at 23°C for 2, 4 and 6 months. Then, stability was compared with its viscosity immediately after preparation and rated on the following four-rank scale of "Excellent", "Good", "Acceptable" and "Unacceptable". The viscosity was measured at 23°C by use of a BH-type viscometer at 10 r/min. Excellent: (viscosity after left to stand at 23°C for a predetermined period)/(viscosity immediately after preparation) ≤ 1.5
   Good: 1.5 < (viscosity after left to stand at 23°C for a predetermined period)/(viscosity immediately after preparation) ≤ 2.0
   Acceptable: 2.0 < (viscosity after left to stand at 23°C for a predetermined period)/(viscosity immediately after preparation) ≤ 3.0
   Unacceptable: 3.0 < (viscosity after left to stand at 23°C for a predetermined period)/(viscosity immediately after preparation)

To rate the characteristic value of the stability in the present invention, a characteristic value rated as "Excellent" is the most excellent from a practical standpoint, followed by one rated as "Good". A characteristic value rated as "Acceptable" is inferior to those rated as "Excellent" and "Good" but still has practicability. However, "Unacceptable" represents a characteristic value which is the most inferior and lacks practicability.

In evaluation of an adhesive property in the present invention, the failure of a mortar material preferably occurs as soon as possible, and one in which the mortar failure can be observed within 7 days has excellent practicability. Further, stability is a characteristic value which verifies that initial viscosity in a sealed condition can be retained, and the smaller a change in initial viscosity, the better practicability the composition has. That is, after the composition is left to stand in a sealed condition at room temperature for 4 months, the composition still has practicability if its viscosity is within 3 times its initial viscosity, while it has no practicability if its viscosity exceeds 3 times its initial viscosity. Further, evaluation of a curing rate is an important test to know that the failure of a mortar material can be achieved in a short time. The shorter the time to achieve the failure of the mortar material with the composition applied in the form of a coating film, the better this characteristic value is. However, those which can be cured within 15 hours at the latest have practicability.

As is obvious from comparisons of Examples 1 to 5 and 18 to 20 with Comparative Examples 1 and 2 in the present invention, when the specific ketimine compounds found in the present invention were used, the failure of a mortal material was observed in a short time without impairing storage stability. Thus, Examples using them show an excellent rise of adhesive strength and a fast curing rate and show apparently better characteristic values than Comparative Examples using the conventionally well-known ketimine compounds. At this point, it should be noted that amine compounds in Examples 1 and 18 to 20 and Comparative Examples 1 and 2 are the same and such a significant difference in curing rate occurs according to different carbonyl compounds to be condensed. That is, the ketimine compounds used in Examples 1 to 3 and 18 to 20 and synthesized by use of diethyl ketone, according to their curing rates, have significantly excellent quick curability.

Further, when a variety of alkoxysilane compounds as used in Examples 6 to 9 and a variety of vinyl carboxylates shown in Examples 10 to 12 are added to the one-pack moisture curable epoxy resin composition found this time, stability which is a characteristic value that verifies that initial viscosity in a sealed condition can be maintained is further improved, as is obvious from data of the stability, without impairing an early rise of adhesive strength which is a characteristic which reaches the failure of a mortar material in a short time and quick curability. Further, as is obvious from Example 12, a further improvement in stability is possible when the alkoxysilane compound and the vinyl carboxylate compound are used in combination.

Means for adding a variety of silyl carboxylates as used in Examples 13 to 17 to the one-pack moisture curable epoxy resin composition found this time imparts practically required quick curability without impairing stability, i.e., storage stability.

Further, as is obvious from Examples 16 and 17, use of a variety of silyl compounds, vinyl carboxylates and silyl carboxylates in combination is technical means for obtaining a one-pack moisture curable epoxy resin composition having the most excellent properties for which the properties of the specific ketimine compound found this time can be made the most of, i.e., storage stability and quick curability.

### Possibility of Industrial Utilization

As described above, the one-pack moisture curable epoxy resin composition according to the present invention comprises a specific ketimine compound and an epoxy resin. Hence, it is a room-temperature curable adhesive composition which has balanced contradictory properties, i.e., imparts storage stability without impairing quick curability and shows significantly fast rises of initial adhesive property and mechanical strength. Accordingly, the one-pack moisture curable epoxy resin composition according to the present invention can be used in an adhesive, putty material, paint, coating material and potting material using the composition, so that it has significantly high usefulness in industry.

## Claims

1. A one-pack moisture curable epoxy resin composition comprising:
a ketimine compound represented by the following chemical formula (2) which is synthesized from a carbonyl compound represented by the following chemical formula (1) in which two same or different alkyl groups each having 2 to 6 carbon atoms are bonded to a carbonyl group and an amine compound having at least one primary amino group in a molecule, and
an epoxy resin: 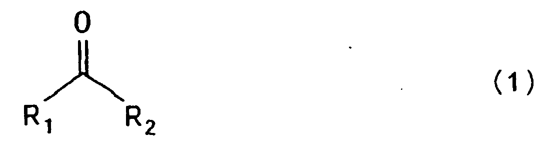
wherein R₁ is an alkyl group having 2 to 6 carbon atoms, and R₂ is an alkyl group having 2 to 6 carbon atoms, and 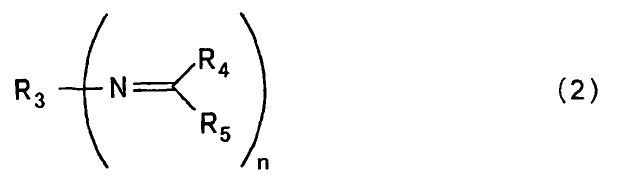
wherein R₃ is an organic group,
R₄ is an alkyl group having 2 to 6 carbon atoms,
R₅ is an alkyl group having 2 to 6 carbon atoms, and
n is an integer of 1 or more.

2. The composition of claim 1, wherein R₁ and R₂ in the carbonyl compound are two same or different alkyl groups each having 2 or 3 carbon atoms.

3. The composition of claim 1, wherein in place of the carbonyl compound represented by the chemical formula (1), a carbonyl compound represented by the following chemical formula (3) in which two ethyl groups are bonded to a carbonyl group is used:

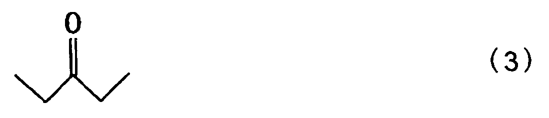

4. The composition of any one of claims 1 to 3, which contains, as a stabilizer, one or two or more silyl compounds selected from the group consisting of a silyl compound represented by the following chemical formula (4) and a silyl compound represented by the following chemical formula (5): 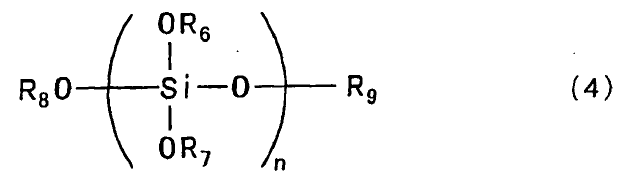
wherein R₆, R₇, R₈ and R₉ are each an alkyl group and they may be the same or different, and
n is an integer of 1 or more, and 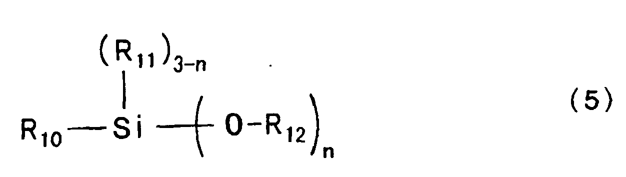
wherein R₁₀ is an organic group,
R₁₁ and R₁₂ are each an alkyl group and they may be the same or different, and
n is an integer of 1 to 3.

5. The composition of any one of claims 1 to 4, which contains a vinyl carboxylate compound represented by the following chemical formula (6) as a stabilizer: 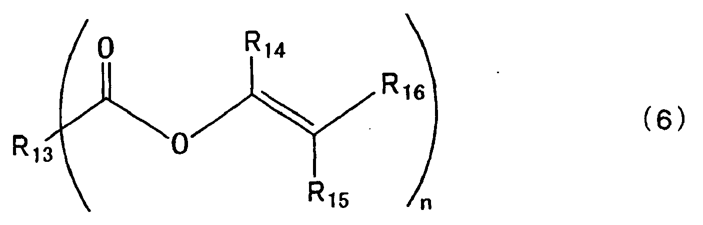
wherein R₁₃ is a hydrogen atom or an organic group,
R₁₄, R₁₅ and R₁₆ are each a hydrogen atom or an organic group and they may be the same or different, and
n is an integer of 1 or more.

6. The composition of any one of claims 1 to 5, which contains, as an accelerator, one or two or more silyl ester compounds selected from the group consisting of a silyl ester compound represented by the following chemical formula (7) and a silyl ester compound represented by the following chemical formula (8): 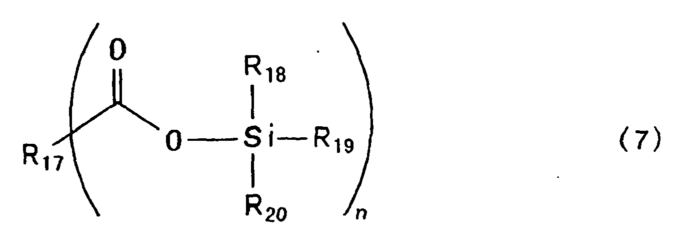
wherein R₁₇ is an organic group,
R₁₈, R₁₉ and R₂₀ are each an organic group and they may be the same or different, and
n is an integer of 1 or more, 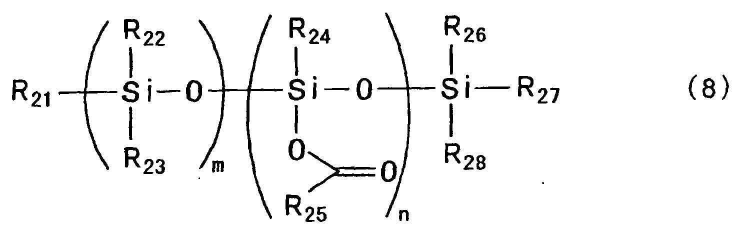
wherein R₂₁, R₂₂, R₂₃, R₂₄, R₂₅, R₂₆, R₂₇ and R₂₈ are each an organic group and they may be the same or different,
m is an integer of 0 or more, and
n is an integer of 1 or more.

## Patentansprüche

1. Einkomponentige feuchtigkeitshärtbare Epoxyharzzusammensetzung, umfassend:
eine Ketiminverbindung der folgenden chemischen Formel (2), welche synthetisiert ist aus einer Carbonylverbindung der folgenden chemischen Formel (1), in welcher zwei gleiche oder voneinander verschiedene Alkylreste, welche jeweils 2 bis 6 Kohlenstoffatome aufweisen, an eine Carbonylgruppe gebunden sind, und einer Aminverbindung, welche mindestens eine primäre Aminogruppe im Molekül aufweist, und
ein Epoxyharz: 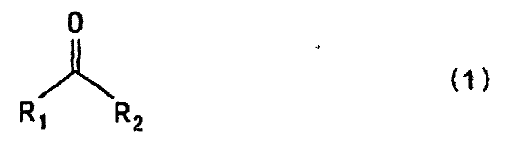
wobei R₁ ein Alkylrest mit 2 bis 6 Kohlenstoffatomen ist und R₂ ein Alkylrest mit 2 bis 6 Kohlenstoffatomen ist, und 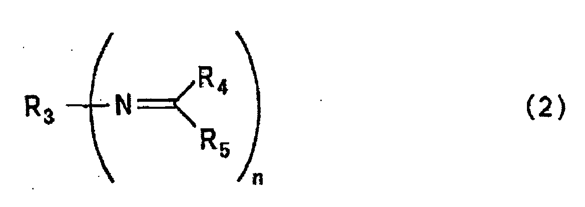
wobei R₃ ein organischer Rest ist,
R₄ ein Alkylrest mit 2 bis 6 Kohlenstoffatomen ist,
R₅ ein Alkylrest mit 2 bis 6 Kohlenstoffatomen ist, und
n eine ganze Zahl von 1 oder mehr ist.

2. Zusammensetzung nach Anspruch 1, wobei R₁ und R₂ in der Carbonylverbindung zwei gleiche oder voneinander verschiedene Alkylreste sind, welche jeweils 2 oder 3 Kohlenstoffatome aufweisen.

3. Zusammensetzung nach Anspruch 1, wobei anstelle der Carbonylverbindung der chemischen Formel (1) eine Carbonylverbindung der folgenden chemischen Formel (3), in welcher zwei Ethylgruppen an einen Carbonylrest gebunden sind, verwendet wird:

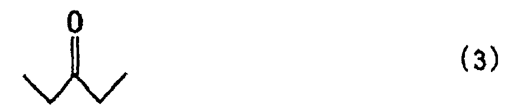

4. Zusammensetzung nach einem der Ansprüche 1 bis 3, welche als Stabilisator eine oder zwei oder mehr Silylverbindungen, ausgewählt aus einer Silylverbindung der folgenden chemischen Formel (4) und einer Silylverbindung der folgenden chemischen Formel (5), enthält: 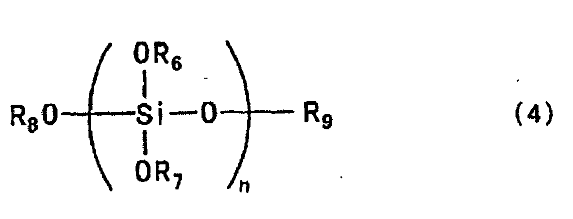
wobei R₆, R₇, R₈ und R₉ jeweils ein Alkylrest sind und sie gleich oder voneinander verschieden sein können, und
n eine ganze Zahl von 1 oder mehr ist, und 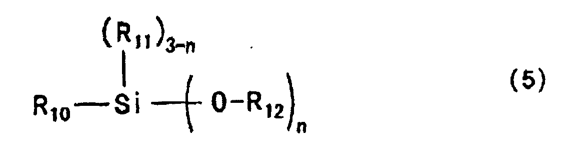
wobei R₁₀ ein organischer Rest ist,
R₁₁ und R₁₂ jeweils ein Alkylrest sind und sie gleich oder voneinander verschieden sein können, und
n eine ganze Zahl von 1 bis 3 ist.

5. Zusammensetzung nach einem der Ansprüche 1 bis 4, welche eine Vinylcarboxylatverbindung der folgenden chemischen Formel (6) als Stabilisator enthält: 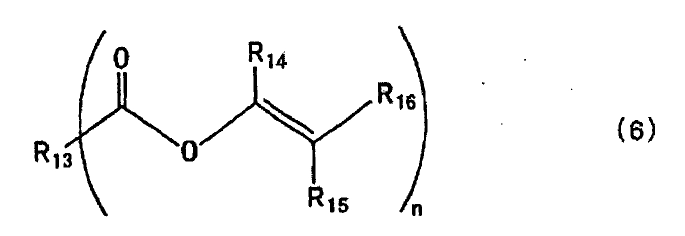
wobei R₁₃ ein Wasserstoffatom oder ein organischer Rest ist,
R₁₄, R₁₅ und R₁₆ jeweils ein Wasserstoffatom oder ein organischer Rest sind und sie gleich oder voneinander verschieden sein können, und
n eine ganze Zahl von 1 oder mehr ist.

6. Zusammensetzung nach einem der Ansprüche 1 bis 5, welche als Beschleuniger eine oder zwei oder mehr Silylesterverbindungen, ausgewählt aus einer Silylesterverbindung der folgenden chemischen Formel (7) und einer Silylesterverbindung der folgenden chemischen Formel (8), enthält: 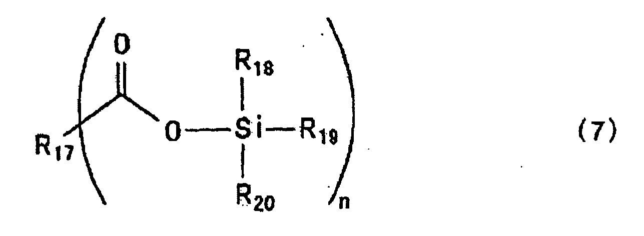
wobei R₁₇ ein organischer Rest ist,
R₁₈, R₁₉ und R₂₀ jeweils ein organischer Rest sind und sie gleich oder voneinander verschieden sein können, und
n eine ganze Zahl von 1 oder mehr ist, 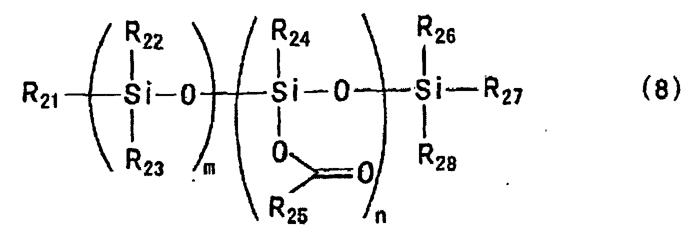
wobei R₂₁, R₂₂, R₂₃, R₂₄, R₂₅, R₂₆, R₂₇ und R₂₈ jeweils ein organischer Rest sind und sie gleich oder voneinander verschieden sein können,
m eine ganze Zahl von 0 oder mehr ist, und
n eine ganze Zahl von 1 oder mehr ist.

## Revendications

1. Composition de résine époxy durcissable par humidité à un composant, comportant :
un composé de kétimine représenté par la formule chimique suivante (2) qui est synthétisé à partir d'un composé de carbonyle représenté par la formule chimique suivante (1) dans lequel deux groupes alkyle identiques ou différents ayant chacun 2 à 6 atomes de carbone sont liés à un groupe carbonyle et un composé d'amine ayant au moins un groupe amino primaire dans une molécule, et
une résine époxy : 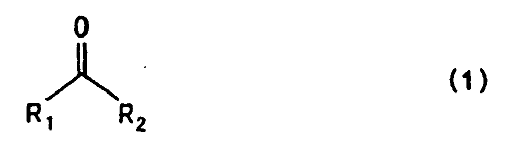
où R₁ est un groupe alkyle ayant 2 à 6 atomes de carbone, et R₂ est un groupe alkyle ayant 2 à 6 atomes de carbone, et 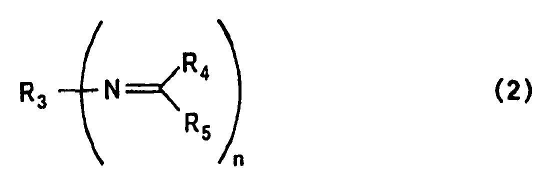
où R₃ est un groupe organique,
R₄ est un groupe alkyle ayant 2 à 6 atomes de carbone,
R₅ est un groupe alkyle ayant 2 à 6 atomes de carbone, et
n est un nombre entier égal à 1 ou plus.

2. Composition selon la revendication 1, dans laquelle R₁ et R₂ dans le composé de carbonyle sont deux groupes alkyle identiques ou différents ayant chacun 2 ou 3 atomes de carbone.

3. Composition selon la revendication 1, dans laquelle, à la place du composé de carbonyle représenté par la formule chimique (1), un composé de carbonyle représenté par la formule chimique suivante (3) dans lequel deux groupes éthyle sont liés à un groupe carbonyle est utilisé :

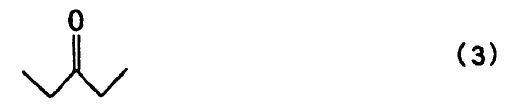

4. Composition selon l'une quelconque des revendications 1 à 3, qui contient, en tant que stabilisateur, un ou deux ou plus de deux composés de silyle sélectionnés parmi le groupe constitué d'un composé de silyle représenté par la formule chimique suivante (4) et d'un composé de silyle représenté par la formule chimique suivante (5) : 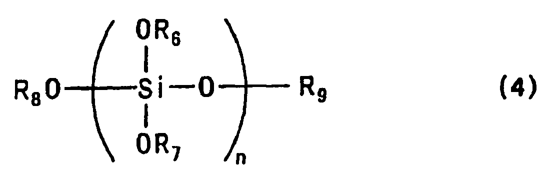
où R₆, R₇, R₈ et R₉ sont chacun un groupe alkyle et ils peuvent être identiques ou différents, et
n est un nombre entier égal à 1 ou plus, et 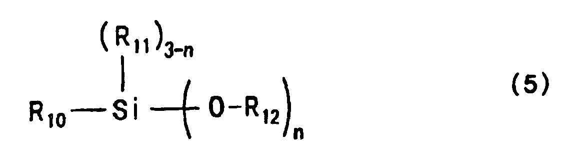
où R₁₀ est un groupe organique,
R₁₁ et R₁₂ sont chacun un groupe alkyle et ils peuvent être identiques ou différents, et
n est un nombre entier compris entre 1 et 3.

5. Composition selon l'une quelconque des revendications 1 à 4, qui contient un composé de carboxylate de vinyle représenté par la formule chimique suivante (6) en tant que stabilisateur : 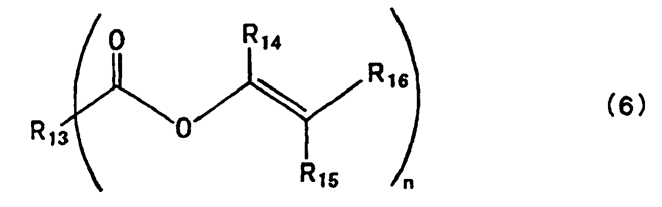
où R₁₃ est un atome d'hydrogène ou un groupe organique,
R₁₄, R₁₅ et R₁₆ sont chacun un atome d'hydrogène ou un groupe organique et ils peuvent être identiques ou différents, et
n est un nombre entier égal à 1 ou plus.

6. Composition selon l'une quelconque des revendications 1 à 5, qui contient, en tant qu'accélérateur, un ou deux ou plus de deux composés d'ester de silyle sélectionnés parmi le groupe constitué d'un composé d'ester de silyle représenté par la formule chimique suivante (7) et d'un composé d'ester de silyle représenté par la formule chimique suivante (8) : 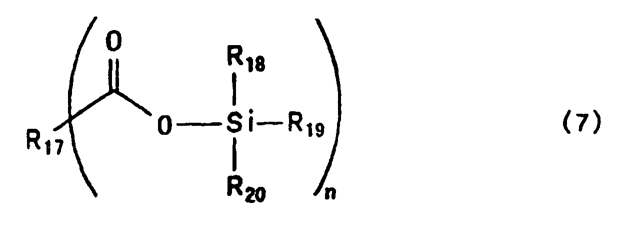
où R₁₇ est un groupe organique,
R₁₈, R₁₉ et R₂₀ sont chacun un groupe organique et ils peuvent être identiques ou différents, et
n est un nombre entier égal à 1 ou plus, 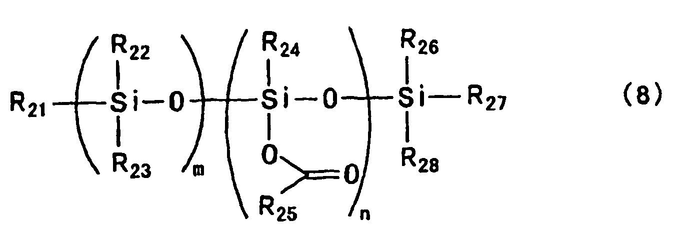
où R₂₁, R₂₂, R₂₃, R₂₄, R₂₅, R₂₆, R₂₇ et R₂₈ sont chacun un groupe organique et ils peuvent être identiques ou différents,
m est un nombre entier égal à 0 ou plus, et
n est un nombre entier égal à 1 ou plus.
